# EUROPEAN PATENT SPECIFICATION

(11) **EP 3 197 265 B1**
(45) Date of publication and mention of the grant of the patent: **17.03.2021**
(21) Application number: 15784418.4
(22) Date of filing: 23.09.2015
(51) Int. Cl.: A01G 9/02

(54) **PLANTING ASSEMBLIES**
PFLANZANORDNUNGEN
ENSEMBLES DE PLANTATION

(30) Priority: 24.09.2014 GB 201416847; 21.01.2015 GB 201501014
(43) Date of publication of application: 02.08.2017
(73) Proprietor: Ross, Gavin, Glasgow G12 8PD (GB)
(72) Inventor: Ross, Gavin, Glasgow G12 8PD (GB)
(74) Representative: Lawrie IP Limited
(86) International application number: PCT/GB2015/052756
(87) International publication number: WO 2016/046547

(56) References cited:
- WO-A1-90/07266
- DE-A1-102012 001 471
- GB-A- 2 446 041
- US-A1- 2008 120 904
- US-A1- 2009 223 126

## Description

### Field of the invention

This invention relates to assemblies for use in growing plants.

### Background to the invention

Many people who wish to grow plants for decorative or culinary purposes are constrained by lack of space. Use may be made of tubs, planters, window boxes and the like, but these are limited to the area on which they stand or hang.

It is known to use vertical planting or planting walls. Typically, a series of troughs is secured to a wall or to structural vertical supports. However, securing to a wall may overload the wall and/or introduce a risk of damp penetration. Known solutions of this nature also tend to require professional erection and to be expensive.

There is therefore a need for a simple cheap planting assembly which optimises use of space and can be erected in a simple manner by the user.

US 2008/0120904 A1 relates to a plate-like support that is provided with a number of accommodating spaces arranged its surfaces. Two sets of spiral wires form a mesh member which forms the plate-like support having a first surface and a second surface.

WO 90/07266 relates to an arrangement in plant columns that comprises a column-shaped casing which contains a plant substrate and has a plurality of spaced-apart openings.

### Summary of the invention

Accordingly, the present invention from one aspect provides a planting assembly as set out in claim 1.

In some aspects, the planting assembly comprises a support in the form of a sheet with an array of apertures; the sheet being folded to form a plurality of parallel, U-shaped ribs, the apertures being aligned across the ribs; and a plurality of planting receptacles each mounted in the apertures of two or more ribs; the planting receptacles being adapted to contain a growing medium.

In certain embodiments the ribs, in use, are arranged vertically and the planting receptacles are in the form of horizontal troughs which may be formed of plastic guttering.

The ribs may be arranged vertically. The apertures may be arranged horizontally.

The planting receptacles may be horizontal troughs. The planting receptacles may be substantially elongate semi-circular members. The planting receptacles may be semi-circular guttering.

Alternatively, the troughs may be formed by rolled sheet material cut to form spaced apertures.

The planting receptacles may be formed from rolled sheet material. The planting receptacles may include one or more apertures. The one or more apertures being configured to allow insertion of the growing medium into the planting receptacle. The planting receptacle may configured such that the one or more apertures can be cut once the planting receptacle has been located in the apertures of the ribs of the support.

The planting receptacles may be recycled plastic containers. The planting receptacles may be bottles. The bottles may be secured in position by means of their screw caps. The bottles may be secured in position by means of their screw caps and flange.

The planting receptacle may be made of ethylene propylene diene monomer (EPDM) or high-density polyethylene (HDPE). The planting receptacle may be made of Stokbord. The planting receptacle may be made of low-density polyethylene (LDPE). The planting receptacle may be made of recycled low-density polyethylene (LDPE). This may be between 1.5mm and 5mm thick sheet material. The sheet material may be made from a plastics material. The sheet may be made from a recycled plastics material.

In other embodiments the ribs, in use, are arranged horizontally, and the planting receptacles are formed by recycled plastic containers. The containers may be bottles, and the bottles may be secured in position by means of their screw caps. The containers may be bottles, and the bottles may be secured in position by means of their screw caps and flanges.

The ribs may be arranged horizontally. The apertures may be arranged vertically.

The upper and lower edges of the sheet may be formed to facilitate the assembly being positioned to lean against a vertical supporting member, such as a wall, and the assembly may include a ballast secured to the rear of the assembly, preferably in the form of a bag containing ballast material such as sand, gravel, water etc. The planting assembly may further comprise a ballast member that is securable to the rear of the assembly. The ballast member may be a bag containing ballast material such as sand, gravel, water etc. The bag may also be used to store the components of the planting assembly.

The planting assembly may be configured such that it may be attachable to a wall, or other supporting member, by one or more releasable fixing devices, such as cable ties, brackets, or the like.

The sheet may be made of ethylene propylene diene monomer (EPDM) or high-density polyethylene (HDPE). The sheet may be made of Stokbord. The sheet may be made of low-density polyethylene (LDPE). The sheet may be made of recycled low-density polyethylene (LDPE). The sheet may be between 1.5mm and 5mm thick sheet. The sheet may be 3mm thick. The sheet may be made from recycled ethylene propylene diene monomer (EPDM) or high-density polyethylene (HDPE). The sheet may be made from a plastics material. The sheet may be made from a recycled plastics material.

From another aspect, the present application discloses an embodiment, which does not fall under the scope of the claims, that provides an apertured sheet for use in forming the foregoing assembly.

The sheet may include a plurality of vertically or horizontally aligned apertures. The sheet may be capable of being at least partially undulated to form two or more substantially parallel, U-shaped rib portions, with the apertures being aligned across the ribs.

The sheet may be made of ethylene propylene diene monomer (EPDM) or high-density polyethylene (HDPE). The sheet may be made of Stokbord. The sheet may be made of low-density polyethylene (LDPE). The sheet may be made of recycled low-density polyethylene (LDPE). The sheet may be between 1.5mm and 5mm thick sheet. The sheet may be 3mm thick. The sheet may be made from recycled ethylene propylene diene monomer (EPDM) or high-density polyethylene (HDPE). The sheet may be made from a plastics material. The sheet may be made from a recycled plastics material.

A further aspect of the invention provides a kit of parts for making the foregoing assembly as set out in claim 14.

The kit of parts may include two or more apertured sheets, each apertured sheet including a plurality of planting receptacles, lengths of trough or gutter.

The kit may further include a bag in which the parts are packed, the bag subsequently being usable as a ballast bag.

In certain embodiments the ribs, in use, are arranged vertically and the planting receptacles are in the form of horizontal troughs which may be formed of plastic guttering.

The ribs may be arranged vertically. The apertures may be arranged horizontally.

The planting receptacles may be horizontal troughs. The planting receptacles may be substantially elongate semi-circular members. The planting receptacles may be semi-circular guttering.

Alternatively, the troughs may be formed by rolled sheet material cut to form spaced apertures.

The planting receptacles may be formed from rolled sheet material. The planting receptacles may include one or more apertures. The one or more apertures being configured to allow insertion of the growing medium into the planting receptacle. The planting receptacle may be configured such that the one or more apertures can be cut once the planting receptacle has been located in the apertures of the ribs of the support.

The planting receptacles may be recycled plastic containers. The planting receptacles may be bottles. The bottles may be secured in position by means of their screw caps. The bottles may be secured in position by means of their screw caps and flange.

The planting receptacle may be made of ethylene propylene diene monomer (EPDM) or high-density polyethylene (HDPE). The planting receptacle may be made of Stokbord. The planting receptacle may be made of low-density polyethylene (LDPE). The planting receptacle may be made of recycled low-density polyethylene (LDPE). This may be between 1.5mm and 5mm thick sheet material. The sheet material may be made from a plastics material. The sheet may be made from a recycled plastics material.

In other embodiments the ribs, in use, are arranged horizontally, and the planting receptacles are formed by recycled plastic containers. The containers may be bottles, and the bottles may be secured in position by means of their screw caps. The containers may be bottles, and the bottles may be secured in position by means of their screw caps and flanges.

The ribs may be arranged horizontally. The apertures may be arranged vertically.

The upper and lower edges of the sheet may be formed to facilitate the assembly being positioned to lean against a wall and the assembly may include a ballast secured to the rear of the assembly, preferably in the form of a bag containing ballast material such as sand, gravel, water etc. The planting assembly may further comprise a ballast member that is securable to the rear of the assembly. The ballast member may be a bag containing ballast material such as sand, gravel, water etc. The bag may also be used to store the components of the planting assembly.

The planting assembly may be configured such that it may be attachable to a wall, or other supporting member, by one or more releasable fixing devices, such as cable ties, brackets, or the like.

The sheet may be made of ethylene propylene diene monomer (EPDM) or high-density polyethylene (HDPE). The sheet may be made of Stokbord. The sheet may be made of low-density polyethylene (LDPE). The sheet may be made of recycled low-density polyethylene (LDPE). The sheet may be between 1.5mm and 5mm thick sheet. The sheet may be 3mm thick. The sheet may be made from recycled ethylene propylene diene monomer (EPDM) or high-density polyethylene (HDPE). The sheet may be made from a plastics material. The sheet may be made from a recycled plastics material.

Another aspect of the invention resides in a method of forming a planting assembly as set out in claim 15.

The sheet of foldable material may be stiff.

In certain embodiments the ribs, in use, are arranged vertically and the planting receptacles are in the form of horizontal troughs which may be formed of plastic guttering.

The ribs may be arranged vertically. The apertures may be arranged horizontally.

The planting receptacles may be horizontal troughs. The planting receptacles may be substantially elongate semi-circular members. The planting receptacles may be semi-circular guttering.

Alternatively, the troughs may be formed by rolled sheet material cut to form spaced apertures.

In this arrangement the planting receptacles are pre-rolled and inserted through the apertures. After insertion, the rolled sheet tries to unroll, which causes an interference fit between the planting receptacle and the apertures.

The planting receptacles may be formed from rolled sheet material. The planting receptacles may include one or more apertures. The one or more apertures being configured to allow insertion of the growing medium into the planting receptacle. The planting receptacle may be configured such that the one or more apertures can be cut once the planting receptacle has been located in the apertures of the ribs of the support.

The planting receptacles may be recycled plastic containers. The planting receptacles may be bottles. The bottles may be secured in position by means of their screw caps. The bottles may be secured in position by means of their screw caps and flange.

The planting receptacle may be made of ethylene propylene diene monomer (EPDM) or high-density polyethylene (HDPE). The planting receptacle may be made of Stokbord. The planting receptacle may be made of low-density polyethylene (LDPE). The planting receptacle may be made of recycled low-density polyethylene (LDPE). This may be between 1.5mm and 5mm thick sheet material. The sheet material may be made from a plastics material. The sheet may be made from a recycled plastics material.

In other embodiments the ribs, in use, are arranged horizontally, and the planting receptacles are formed by recycled plastic containers. The containers may be bottles, and the bottles may be secured in position by means of their screw caps. The containers may be bottles, and the bottles may be secured in position by means of their screw caps and flanges.

The ribs may be arranged horizontally. The apertures may be arranged vertically.

The upper and lower edges of the sheet may be formed to facilitate the assembly being positioned to lean against a wall and the assembly may include a ballast secured to the rear of the assembly, preferably in the form of a bag containing ballast material such as sand, gravel, water etc. The planting assembly may further comprise a ballast member that is securable to the rear of the assembly. The ballast member may be a bag containing ballast material such as sand, gravel, water etc. The bag may also be used to store the components of the planting assembly.

The planting assembly may be configured such that it may be attachable to a wall, or other supporting member, by one or more releasable fixing devices, such as cable ties, brackets, or the like.

The method may comprise the further step of attaching the planting assembly to a supporting member, such as a wall, or the like.

The planting assembly may be attachable to a wall, or other supporting member, by one or more releasable fixing devices, such as cable ties, brackets, or the like.

The sheet may be made of ethylene propylene diene monomer (EPDM) or high-density polyethylene (HDPE). The sheet may be made of Stokbord. The sheet may be made of low-density polyethylene (LDPE). The sheet may be made of recycled low-density polyethylene (LDPE). The sheet may be between 1.5mm and 5mm thick sheet. The sheet may be 3mm thick. The sheet may be made from recycled ethylene propylene diene monomer (EPDM) or high-density polyethylene (HDPE). The sheet may be made from a plastics material. The sheet may be made from a recycled plastics material.

A further aspect of the application discloses an embodiment, which does not fall under the scope of the claims, that provides a planting assembly comprising:
a support member, wherein the support member is a sheet comprising a plurality of apertures, the sheet being at least partially undulated to form two or more substantially parallel, U-shaped rib portions, with the apertures being aligned across the ribs; and
two or more planting receptacles, wherein each planting receptacle is located in the apertures of adjacent ribs and is adapted to contain a growing medium.

The apertures in the sheet may be equidistant, or evenly spaced, from one another.

The at least one sheet may be formed into an undulating wave shape.

The at least one sheet may be formed into a substantially sinusoidal wave shape. The at least one sheet may be formed into any suitable oscillating waveform shape. The surface of the at least one sheet may thus be in the form of a wave, that may be sinusoidal, or otherwise oscillating and repeating.

The at least one sheet may include a plurality of cut away portions. The cut away portions being configured to provide access to the planting receptacles during use.

The at least one sheet may include a plurality of apertures. The apertures being configured to allow plants two grow through the at least one sheet during use.

The planting assembly may comprise two or more sheets and two or more planting receptacles. Each sheet may include one planting receptacle. The planting assembly may comprise a plurality of sheets and a plurality of planting receptacles.

The planting assembly may be configured such that each sheet and associated planting receptacle are mounted on top of one another. That is, the sheets and planting receptacles may be vertically arranged, or stacked.

Each sheet may be configured such that it can interlock with an adjacent sheet. Each sheet may be configured such that it can interlock with an adjacent sheet positioned above and/or below the sheet. Each sheet may be configured such that it is releasably engagable with an adjacent sheet.

Each sheet may include a plurality of sheet receiving slots. Each slot may be vertically arranged. The sheet receiving slots may be cut out portions of the sheet.

The sheet receiving slots may be located towards the upper portion and/or the lower portion of the sheet. The sheet receiving slots may be located towards the upper portion and the lower portion of the sheet. The sheet receiving slots located towards the upper portion of the sheet may be longer than the sheet receiving slots located towards the lower portion of the sheet. The sheet receiving slots located towards the lower portion of the sheet may be longer than the sheet receiving slots located towards the upper portion of the sheet.

The sheet located at the bottom of the planting assembly may have a continuous ground-engaging lower surface or edge. That is, the sheet located at the bottom of the planting assembly may have a ground-engaging lower surface or edge that is void of any interlocking portions, sheet receiving slots etc.

The or each sheet is configured such that it can engage or interlock with a portion of the planting receptacle.

The or each sheet includes a cut away portion that is configured to receive and engage with a correspondingly-shaped portion of the planting receptacle. The cut away portion of the or each sheet may include one or more shoulder portions, the or each shoulder portion being configured to abut against an upwardly-facing portion of the planting receptacle.

The planting receptacle may include one or more protruding members. The one or more protruding members may be lateral protruding members and may be configured to provide a supporting surface for a portion of the sheet. The one or more protruding members may run the length of the planting receptacle.

The at least one planting receptacle may include at least one cut away portion that is configured to receive an engage with a correspondingly-shaped portion of the or each sheet. The cut away portion of the at least one planting receptacle may be in the form of a slot. The cut away portion of the at least one planting receptacle may be in the form of two slots, the slots being arranged in an X shape. The cut away portion of the at least one planting receptacle may engage with an upper portion of the or each sheet. The or each sheet may include one or more protruding portions that engage with the at least one cut away portion of the at least one planting receptacle. The at least one planting receptacle may include a plurality of cut away portions. The plurality of cut away portions may be evenly spaced along the length of the at least one planting receptacle. The plurality of cut away portions may be located on the lower portion of the at least one planting receptacle.

Where the planting assembly includes two or more sheets and planting receptacles, each sheet may be horizontally (or laterally) offset from each adjacent sheet. That is, for any given sheet, the sheet above or below that sheet will be horizontally offset, or shifted. Each sheet may be arranged such that a peak of any given sheet is vertically aligned with a trough of any adjacent sheet, and *vice versa.*

The waveform of each sheet may be substantially 180° out of phase with the waveform any adjacent sheet.

The at least one row of apertures may be arranged horizontally.

The planting receptacles may be in the form of horizontal troughs which may be formed of plastic guttering.

The planting receptacles may be horizontal troughs. The planting receptacles may be substantially elongate semi-circular members. The planting receptacles may be semi-circular guttering.

Alternatively, the troughs may be formed by rolled sheet material cut to form spaced apertures.

The planting receptacles may be formed from rolled sheet material. The planting receptacles may include one or more apertures. The one or more apertures being configured to allow insertion of the growing medium into the planting receptacle. The planting receptacle may configured such that the one or more apertures can be cut once the planting receptacle has been located in the apertures of the ribs of the support.

The planting receptacle may be made of ethylene propylene diene monomer (EPDM) or high-density polyethylene (HDPE). The planting receptacle may be made of Stokbord. The planting receptacle may be made of low-density polyethylene (LDPE). The planting receptacle may be made of recycled low-density polyethylene (LDPE). This may be between 1.5mm and 5mm thick sheet material. The sheet material may be made from a plastics material. The sheet may be made from a recycled plastics material.

The lower edge of the at least one sheet may be formed to provide support to the planting assembly. In this arrangement the planting assembly may be free-standing.

The upper and lower edges of the sheet may be formed to facilitate the assembly being positioned to lean against a vertical supporting member, such as a wall, and the assembly may include a ballast secured to the rear of the assembly, preferably in the form of a bag containing ballast material such as sand, gravel, water etc. The planting assembly may further comprise a ballast member that is securable to the rear of the assembly. The ballast member may be a bag containing ballast material such as sand, gravel, water etc. The bag may also be used to store the components of the planting assembly.

The planting assembly may be configured such that it may be attachable to a wall, or other supporting member, by one or more releasable fixing devices, such as cable ties, brackets, or the like.

The sheet may be made of ethylene propylene diene monomer (EPDM) or high-density polyethylene (HDPE). The sheet may be made of Stokbord. The sheet may be made of low-density polyethylene (LDPE). The sheet may be made of recycled low-density polyethylene (LDPE). The sheet may be between 1.5mm and 5mm thick sheet. The sheet may be 3mm thick. The sheet may be made from recycled ethylene propylene diene monomer (EPDM) or high-density polyethylene (HDPE). The sheet may be made from a plastics material. The sheet may be made from a recycled plastics material.

From another aspect, the present application discloses an embodiment, which does not fall under the scope of the claims, that provides an apertured sheet for use in forming the foregoing assembly.

The sheet may include a plurality of horizontally aligned apertures. The sheet may be capable of being formed into a wave shape such that the apertures are substantially aligned. The sheet may be formed into an undulating wave shape, substantially sinusoidal wave shape or any suitable oscillating waveform shape. The surface of the at least one sheet may thus be in the form of a wave, that may be sinusoidal, or otherwise oscillating and repeating. The at least one sheet may include a plurality of cut away portions. The cut away portions being configured to provide access to the planting receptacles during use. Each sheet may be configured such that it can interlock with an adjacent sheet. Each sheet may be configured such that it can interlock with an adjacent sheet positioned above and/or below the sheet. Each sheet may include a plurality of sheet receiving slots. Each slot may be vertically arranged. The sheet receiving slots may be cut out portions of the sheet.

The sheet may be made of ethylene propylene diene monomer (EPDM) or high-density polyethylene (HDPE). The sheet may be made of Stokbord. The sheet may be made of low-density polyethylene (LDPE). The sheet may be made of recycled low-density polyethylene (LDPE). The sheet may be between 1.5mm and 5mm thick sheet. The sheet may be 3mm thick. The sheet may be made from recycled ethylene propylene diene monomer (EPDM) or high-density polyethylene (HDPE). The sheet may be made from a plastics material. The sheet may be made from a recycled plastics material.

The row of apertures may be equidistant, or evenly spaced, from one another.

The step of forming the sheet into a wave shape may include forming the sheet into an undulating wave shape, sinusoidal wave shape or any suitable oscillating waveform shape.

The method may include providing two or more sheets of material, forming at least one row of apertures in each sheet, forming each sheet into a wave shape such that the apertures are substantially aligned, mounting a planting receptacle through the apertures of each sheet, and stacking each sheet and planting receptacle in a vertical arrangement.

The method may also include the step of connecting, or interlocking, each sheet together. The method of connecting, or interlocking, each sheet together may include slotting each sheet together through sheet receiving slots in each sheet.

The method may also include the step of connecting each sheet with its associated planting receptacle.

The method of stacking each sheet may include the step of horizontally shifting each adjacent sheet. Each sheet may be offset from each adjacent sheet by 180°.

The alternative features and different embodiments as described apply to each and every aspect and each and every embodiment thereof *mutatis mutandis.*

### Brief description of the drawings

Embodiments of the invention will now be described, by way of example only, with reference to the accompanying drawings, in which:
Fig. 1 is a front view of a sheet material;
Fig. 2 is a perspective view of the sheet material in a folded configuration;
Fig. 3 shows the folded sheet material supporting planting receptacles to form a planting assembly according to one embodiment which does not fall under the scope of the claims;
Fig. 4 is a side view of the assembly leaning against a wall;
Fig. 5 illustrates the sheet material having edges shaped to facilitate leaning against a wall;
Fig. 6 is a perspective view from above and one side, showing a further embodiment;
Fig. 7 is a partial enlarged view of the embodiment of Fig. 6 from beneath and one side;
Fig. 8 is a perspective view of a further embodiment;
Fig. 9 is a front view of the invention of Fig. 8;
Fig. 10 is a front perspective view of a sheet and planting receptacle of Fig. 8;
Fig. 11 is a partial exploded side view of Fig. 8;
Fig. 12 is a partial exploded perspective view of Fig. 8; and
Fig. 13 is an underside view of the planting receptacle of Fig. 8

### Description of preferred embodiments

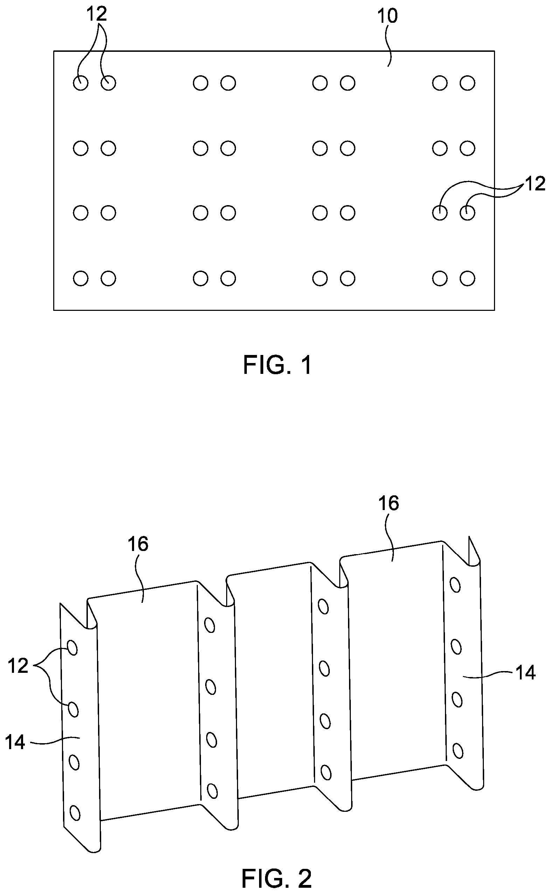

Referring to Fig. 1, a sheet 10 (an example of a support member) is punched, or cut, to form an array of apertures 12. The sheet 10 is of a material which is stiff but can readily be folded. A particularly preferred material is EPDM (ethylene propylene diene monomer (class M)), which has excellent heat, ozone and weather resistance. A thickness of about 3mm is suitable. Alternatively, HDPE (high density polyethylene), Stokbord or low-density polyethylene (LDPE) is suitable. Of course, it should be appreciated that other materials may be used.

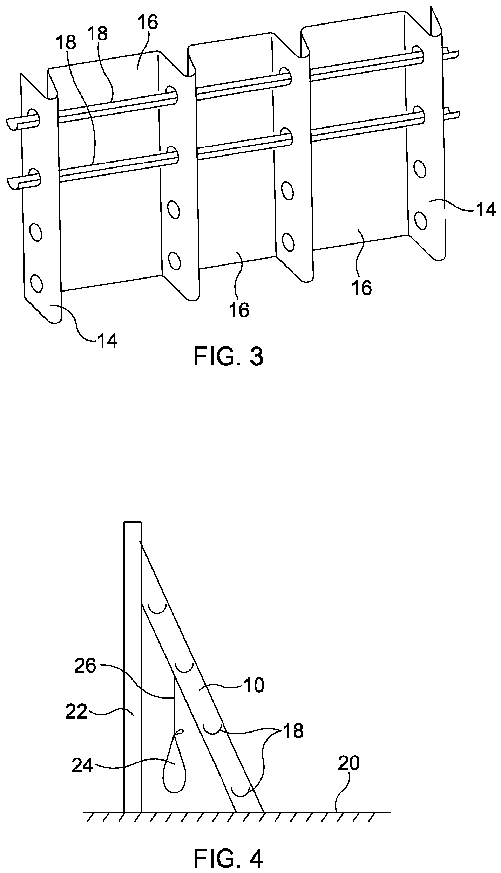

Referring to Figs. 2 and 3, the sheet 10 is folded, or undulated, to form corrugated ribs 14 separated by wall portions 16, such that each rib 14 contains pairs of vertically-spaced apertures 12, and the pairs of apertures 12 are aligned in horizontal rows.

Troughs 18 are inserted through the apertures 12 to form planting receptacles. The troughs 18 may suitably be lengths of plastic guttering. However, it should be appreciated that other suitable devices or materials may be used to form the planting receptacles. In use, the troughs 18 are filled with earth, compost or other growing medium.

In one form, the sheet 10 is initially 3m by 1.5m; when folded, the ribs 14 are 220mm deep and the wall portions are 400mm wide.

The assembly thus formed can be secured in a vertical position to a support such as a wall or fence, for example by driving screws with washers (an example of a releasable fixing device) through the wall portions 16.

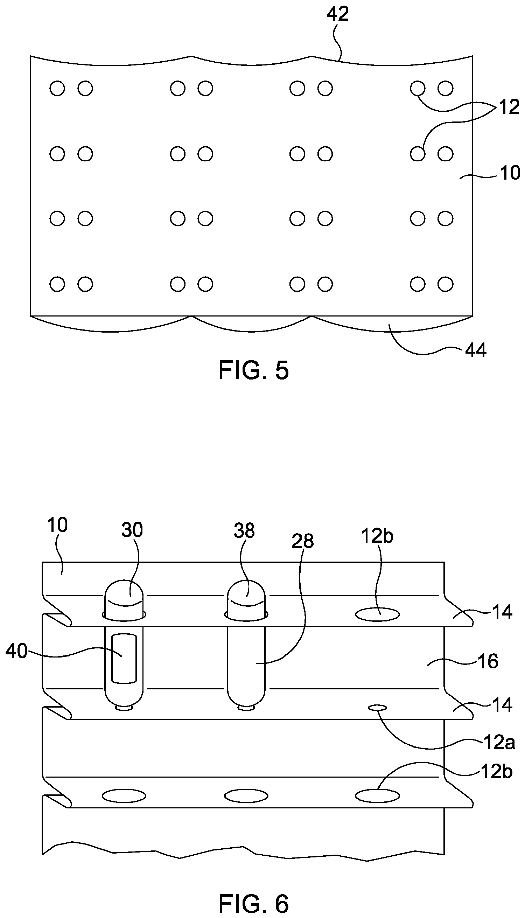

An alternative arrangement is shown in Fig. 4, where the assembly is supported on the ground 20 and leans at a shallow angle against a wall 22. To facilitate this, as indicated in Fig. 5, the upper and lower edges of the sheet 10 may be scalloped to provide suitable angles in use. The scallops may be formed by cutting as at the top edge 42, or by cutting and providing a score line for folding, as at the bottom edge 44.

As also seen in Fig. 4, the assembly may be held in position by a bag 24 containing ballast such as sand, gravel, water, or the like, and tied to the underside of the planting assembly. In one embodiment, the components are supplied packed in a welded PVC bag, and after assembly the bag is used as the ballast bag 24. It is preferred for the bag 24 to be tied in place by a bungee cord 26.

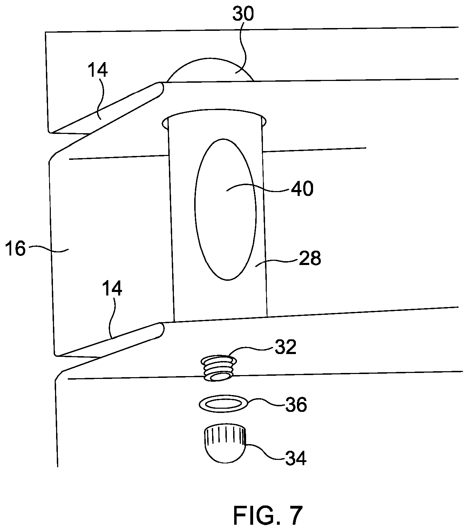

Figs. 6 and 7 illustrate another embodiment, like parts being denoted by like numerals.

Although in Fig. 6 and 7 the corrugated ribs 14 are illustrated as being arranged horizontally, it should be appreciated that the planting assembly is, in use, arranged like the planting assembly of Figs. 1 to 5. That is, the corrugated ribs 14 are arranged vertically. Alternate ribs 14 are provided with small apertures 12a and large apertures 12b. This embodiment is intended to make use of recycled soft drink bottles such as 2 litre polyethylene terephthalate (PET) bottles. The large apertures 12b are dimensioned to receive the perimeter of a bottle 28 adjacent its base 30, while the small apertures 12a are dimensioned to receive the neck 32 of the bottle 28, the bottle 28 being secured in position by applying its screw cap 34 and a washer 36 to the opposite face of the sheet 10.

The bottles 28 are used as planting receptacles by cutting off the base as shown at 38, or by cutting an aperture in the side as shown at 40.

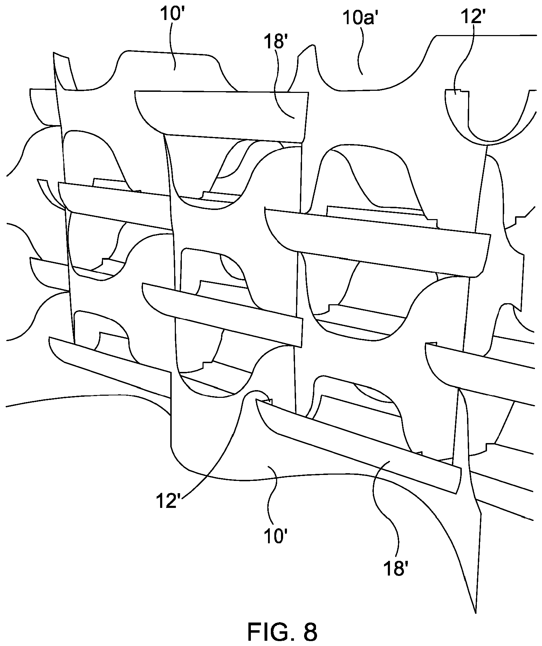

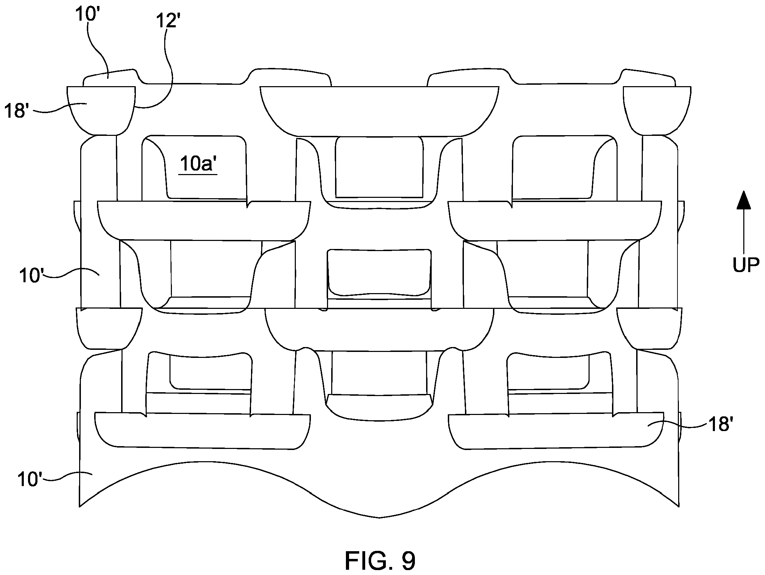

Figs. 8 to 13 illustrate another embodiment.

Referring to Figs. 8 to 13, sheets 10' (an example of a support) are punched, or cut, to form rows of apertures 12'. As described further below, the sheets 10' are also punched, or cut, to form cut away portions 10a', sheet receiving slots 10b' and planting receptacle engaging portions 10c'. The cut away portions 10a' provide access to the troughs 18' (see below) during use. The sheet 10' is of a material which is stiff but can be readily folded or shaped. A particularly preferred material is EPDM (ethylene propylene diene monomer (class M)), which has excellent heat, ozone and weather resistance. A thickness of about 3mm is suitable. Alternatively, HDPE (high density polyethylene), Stokbord or low-density polyethylene (LDPE) is suitable. Of course, it should be appreciated that other materials may be used.

With reference to Figs. 8 to 13, each sheet 10' is formed into a wave shape such that the apertures 12' are substantially aligned. As illustrated, each sheet 10' has an undulating wave shape. That is, each sheet 10' may have a substantially sinusoidal wave shape. The sinusoidal wave shape of the sheet 10' is best illustrated in Fig. 8, where the lower portion of the sheet 10' clearly forms a sinusoidal wave pattern. In this arrangement the apertures 12' in each sheet are equidistant, or evenly spaced from one another.

Troughs 18' (an example of planting receptacles) are inserted through the apertures 12' to form planting receptacles. The troughs 18' may suitably be lengths of plastic guttering. However, it should be appreciated that other suitable devices or materials may be used to form the planting receptacles. In use, the troughs 18' are filled with earth, compost or other growing medium.

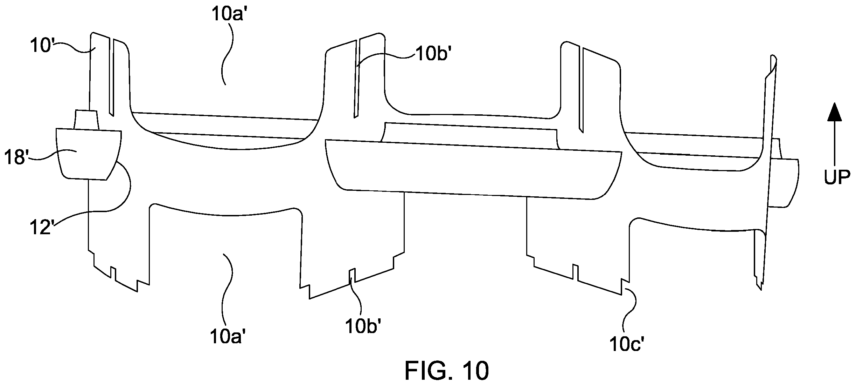

As illustrated, the planting assembly includes a plurality of sheets 10' and troughs 18'. The sheets 10' and troughs 18' are vertically arranged, i.e. vertically stacked on top of one another. Each sheet 10' is configured such that it interlocks with adjacent sheets 10'. As illustrated in Fig. 10, each sheet 10' (with exception of the bottom sheet 10') includes sheet receiving slots 10b'. In the embodiment illustrated and described here each sheet 10' includes longer slots 10b' towards the upper portion and shorter slots 10b' towards the lower portion. However, it should be appreciated that these slots could be swapped.

As will be appreciated, providing sheet receiving slots 10b' in each sheet 10' allows the sheets 10' to be interlocked and held in position. The undulating shape of the sheets 10' and the interlocking therebetween provides a strong supporting structure for the planting assembly.

The planting assembly of the present invention is therefore modular and the height and width can be tailored to suit a user's requirements. More troughs 18' can be provided by simply adding another "layer" of sheet 10' and trough 18' on top of an existing sheet 10' and trough 18'.

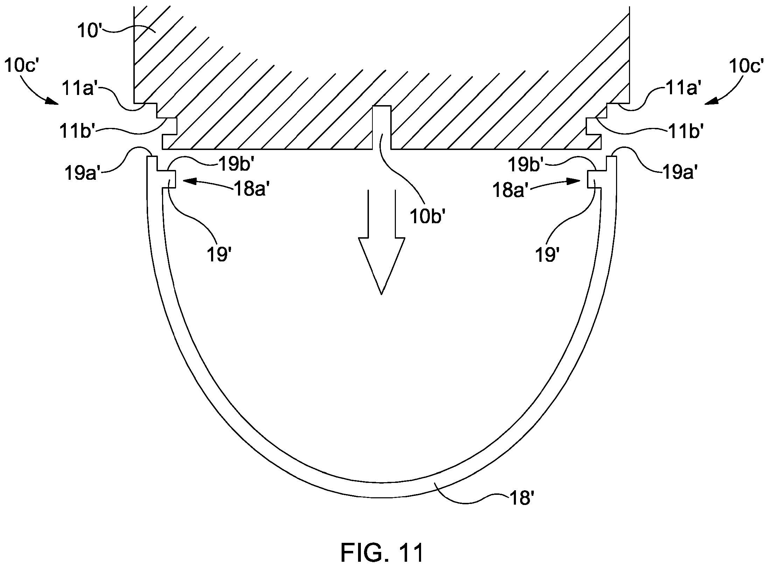

With reference to Figs. 10 and 11, each sheet 10' also includes planting receptacle engagement cut away portions 10c'. Planting receptacle engagement portions 10c' are configured to receive and engage with the troughs 18'. In the embodiment illustrated and described here each sheet 10' includes a planting receptacle engagement portion 10c' that is configured to receive an engage with a correspondingly-shaped portion 18a' of the trough 18'. The planting receptacle engagement portion 10c' of each sheet 10' includes two shoulder portions 11a' and 11b', each shoulder portion 11a' and 11b' being configured to abut against an upwardly-facing portion 19a' and 19b' of the trough 18'. In the embodiment illustrated and described here the trough 18' includes an inwardly facing protruding member 19' that runs the length of the trough 18'. The inwardly facing protruding member 19' provides the support for the sheet 10'.

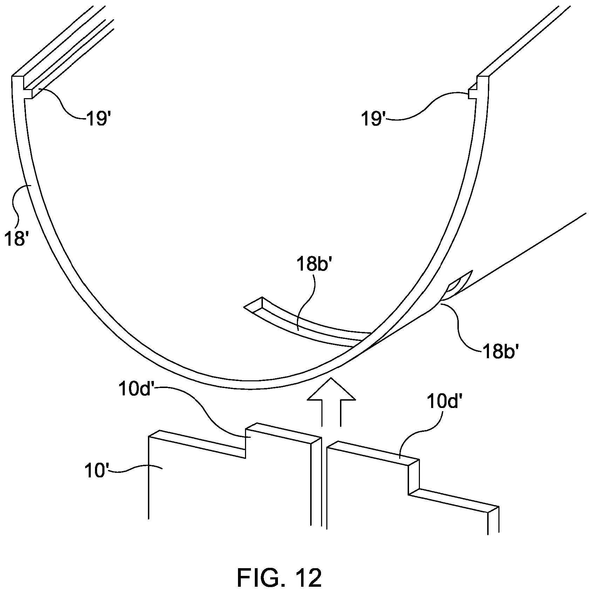

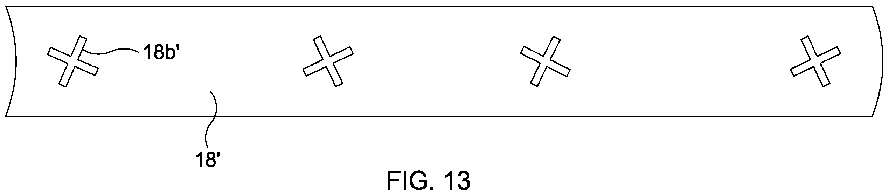

With reference to Figs. 12 and 13, each sheet 10' also includes trough engaging protrusions 10d'. The trough engaging protrusions 10d' are configured to engage with slots 18b' (slots 18' being an example of cut away portions) located in the lower portion of the trough 18'. The trough engaging portions 10d' engage with the slots 18b' of the trough 18' and hold the sheets 10' in place with the troughs 18'. This arrangement provides extra rigidity to the apparatus. The X-shape of the slots 18b' allow the trough 18' to align with the direction of the sheet 10', i.e. depending on the direction of the wave of the sheet 10' as it aligns with the trough 18'. Note that in Fig. 12 the slots 18b' have been illustrated as single slots, whereas in Fig. 13 the slots 18b' have been illustrated as being X-shape, i.e. double slots, orthogonally arranged.

As illustrated in Figs. 8 to 10, the sheets 10' are horizontally offset from each other. That is, the sheets 10' of the planting assembly are substantially 180° out of phase with one another. Therefore, in a plan view of the planting assembly (for example, a plan view of Fig. 8) the waveform of each sheet 10' is substantially 180° out of phase with the waveform of each adjacent sheet 10'. This arrangement of the sheets 10' provides balance and strength to the planting assembly.

In one form, each sheet 10' is initially 2.4m by 1.2m. The total planting assembly is therefore 1.8m by 1.1m.

The lower edge of the sheet 10' may be formed to provide support to the planting assembly. In this arrangement the planting assembly may be free-standing. Alternatively, the upper and lower edges of the sheet 10' may be formed to facilitate the assembly being positioned to lean against a vertical supporting member, such as a wall, and the assembly may include a ballast secured to the rear of the assembly, preferably in the form of a bag containing ballast material such as sand, gravel, water etc. The planting assembly may further comprise a ballast member that is securable to the rear of the assembly. The ballast member may be a bag containing ballast material such as sand, gravel, water etc. The bag may also be used to store the components of the planting assembly.

The planting assembly may be configured such that it may be attachable to a wall, or other supporting member, by one or more releasable fixing devices, such as cable ties, brackets, or the like.

The invention thus provides an economical vertical garden arrangement which is simple to pack and transport, and can be readily erected by an amateur user. The invention also provides a very compact system and modular system, as each sheet 10' may be stored easily and, when erected, may be easy to add additional "layers" (i.e. additional sheets 10' and troughs 18').

Modifications may be made to the foregoing embodiments within the scope of the appended claims. For example, guttering may be replaced as troughs by rolled-up plastic sheet inserted through the apertures in the ribs, holes then being cut in the rolled-up sheet for inserting growing medium and plants. Other forms of sheet material and other sizes may be used.

Also, although the corrugated ribs 14 have been described as being arranged vertically and the planting receptacles being arranged horizontally, it should be appreciated that the corrugated ribs 14 could be arranged horizontally and the planting receptacles could be arranged vertically.

Furthermore, although the slots 18b' have been illustrated and described above as being X-shaped, double slots, it should be appreciated that the slots 18b' could be single slots aligned to match the direction of the sheet.

Also, although the sheet 10 has been described and illustrated with cut away portions 10a' to provide access to the troughs 18, it should be appreciated that the sheet 10 may be provided with apertures that allow plants to grow through the sheet during use. The apertures allow plants to grow on either side of the sheet 10.

The scope of the invention is defined by the appended claims.

## Claims

1. A planting assembly comprising:
a support in the form of at least one sheet (10') with a plurality of rows of apertures (12') therein, the at least one sheet (10') being formed into a wave shape such that the apertures (12') are substantially aligned; and
at least one planting receptacle (18'), the at least one planting receptacle (18') being mounted through at least two of the apertures (12') of one row of the sheet (10'), the planting receptacles (18') being adapted to contain a growing medium;
**characterised in that** the at least one sheet (10') includes a cut away portion (10c') that is configured to receive and engage with a correspondingly-shaped portion (18a') of the planting receptacle (18'), such that the at least one sheet (10') is configured to engage or interlock with at least a portion of the planting receptacle (18').

2. A planting assembly according to claim 1, wherein the apertures (12') are evenly spaced from one another.

3. A planting assembly according to claim 1 or claim 2, wherein the at least one sheet (10') is formed into an undulating wave shape.

4. A planting assembly according to any preceding claim, wherein the at least one sheet (10') includes a plurality of cut away portions (10a'), the cut away portions (10a') providing access to the at least one planting receptacle (18').

5. A planting assembly according to any preceding claim, wherein the planting assembly comprises a plurality of sheets (10') and associated planting receptacles (18').

6. A planting assembly according to claim 5, wherein each sheet (10') and associated planting receptacle (18') are mounted on top of one another.

7. A planting assembly according to claim 6, wherein each sheet (10') is configured such that it can interlock with an adjacent sheet (10') of the planting assembly.

8. A planting assembly according to claim 7, wherein each sheet (10') includes a plurality of sheet receiving slots (10b').

9. A planting assembly according to any preceding claim, wherein the planting receptacle (18') includes at least one cut away portion (18b') that is configured to receive and engage with a correspondingly-shaped portion of the sheet (10d').

10. A planting assembly according to any of claims 5 to 9, wherein each sheet (10') is horizontally, or laterally, offset from each adjacent sheet (10').

11. A planting assembly according to any of claims 5 to 10, wherein the waveform of each sheet (10') is substantially 180° out of phase with the waveform any adjacent sheet (10').

12. A planting assembly according to any preceding claim, wherein the planting receptacles (18') are substantially elongate semi-circular members.

13. A planting assembly according to any preceding claim, wherein the planting receptacle (18') is made of ethylene propylene diene monomer (EPDM), high-density polyethylene (HDPE) or low-density polyethylene (LDPE).

14. A kit of parts for making the assembly of claims 5 to 13, comprising a plurality of sheets (10') and a plurality of planting receptacles (18').

15. A method of forming a planting assembly; comprising:
providing at least one sheet of material (10');
forming a plurality of rows of apertures in the sheet (12');
forming the sheet into a wave shape such that the apertures are substantially aligned; and
mounting a planting receptacle (18') through at least two of the apertures of one row, the planting receptacle being adapted to contain a growing medium; **characterised by**
forming a cut away portion (10c') in the sheet (10') that is configured to receive and engage with a correspondingly-shaped portion (18a') of the planting receptacle (18'), such that the sheet (10') is configured to engage or interlock with at least a portion of the planting receptacle (18').

## Patentansprüche

1. Pflanzanordnung, umfassend:
einen Träger in Form von mindestens einem Blatt (10') mit einer Vielzahl von Reihen von Öffnungen (12') darin, wobei das mindestens eine Blatt (10') in einer Wellenform ausgebildet ist, so dass die Öffnungen (12') im Wesentlichen ausgerichtet sind; und
mindestens ein Pflanzgefäß (18'), wobei das mindestens eine Pflanzgefäß (18') durch mindestens zwei der Öffnungen (12') einer Reihe des Blattes (10') angebracht ist, wobei die Pflanzgefäße (18') ausgelegt sind, ein Wachstumsmedium zu halten;
**dadurch gekennzeichnet, dass** das mindestens eine Blatt (10') einen abgeschnittenen Abschnitt (10c') einschließt, der konfiguriert ist, um einen entsprechend geformten Abschnitt (18a') des Pflanzgefäßes (18') aufzunehmen und mit diesem in Eingriff zu kommen, so dass das mindestens eine Blatt (10') konfiguriert, um mit mindestens einem Abschnitt des Pflanzgefäßes (18') in Eingriff zu kommen oder sich mit diesem zu verriegeln.

2. Pflanzanordnung nach Anspruch 1, wobei die Öffnungen (12') gleichmäßig voneinander beabstandet sind.

3. Pflanzanordnung nach Anspruch 1 oder Anspruch 2, wobei das mindestens eine Blatt (10') in eine wellenförmige Wellenform ausgebildet ist.

4. Pflanzanordnung nach einem der vorstehenden Ansprüche, wobei das mindestens eine Blatt (10') eine Vielzahl von abgeschnittenen Abschnitten (10a') einschließt, wobei die abgeschnittenen Abschnitte (10a') Zugang zu dem mindestens einen Pflanzgefäß (18) bereitstellen.

5. Pflanzanordnung nach einem der vorstehenden Ansprüche, wobei die Pflanzanordnung eine Vielzahl von Blättern (10') und zugehörige Pflanzgefäße (18') umfasst.

6. Pflanzanordnung nach Anspruch 5, wobei jedes Blatt (10') und das zugehörige Pflanzgefäß (18') übereinander angebracht sind.

7. Pflanzanordnung nach Anspruch 6, wobei jedes Blatt (10') derart konfiguriert ist, dass es sich mit einem benachbarten Blatt (10') der Pflanzanordnung verriegeln kann.

8. Pflanzanordnung nach Anspruch 7, wobei jedes Blatt (10') eine Vielzahl von Blattaufnahmeschlitzen (10b') einschließt.

9. Pflanzanordnung nach einem der vorstehenden Ansprüche, wobei das Pflanzgefäß (18') mindestens einen abgeschnittenen Abschnitt (18b') einschließt, der konfiguriert ist, um einen entsprechend geformten Abschnitt des Blattes (10d') aufzunehmen und mit ihm in Eingriff zu kommen.

10. Pflanzanordnung nach einem der Ansprüche 5 bis 9, wobei jedes Blatt (10') horizontal oder seitlich von jedem benachbarten Blatt (10') versetzt ist.

11. Pflanzanordnung nach einem der Ansprüche 5 bis 10, wobei die Wellenform jedes Blattes (10') im Wesentlichen um 180° phasenverschoben zu der Wellenform eines benachbarten Blattes (10') ist.

12. Pflanzanordnung nach einem der vorstehenden Ansprüche, wobei die Pflanzgefäße (18') im Wesentlichen längliche halbkreisförmige Elemente sind.

13. Pflanzanordnung nach einem der vorstehenden Ansprüche, wobei das Pflanzgefäß (18') aus Ethylen-Propylen-Dien-Monomer (EPDM), Polyethylen hoher Dichte (HDPE) oder Polyethylen niedriger Dichte (LDPE) hergestellt ist.

14. Teilekit zum Herstellen der Anordnung nach Anspruch 5 bis 13, umfassend eine Vielzahl von Blättern (10') und eine Vielzahl von Pflanzgefäßen (18').

15. Verfahren zum Bilden einer Pflanzanordnung, umfassend:
Bereitstellen mindestens eines Materialblattes (10');
Bilden einer Vielzahl von Öffnungsreihen in dem Blatt (12');
Bilden des Blattes in eine Wellenform, so dass die Öffnungen im Wesentlichen ausgerichtet sind; und
Anbringen eines Pflanzgefäßes (18') durch mindestens zwei der Öffnungen einer Reihe, wobei das Pflanzgefäß ausgelegt ist, um ein Wachstumsmedium zu halten; **gekennzeichnet durch**
Bilden eines abgeschnittenen Abschnitts (10c') in dem Blatt (10'), der konfiguriert ist, um einen entsprechend geformten Abschnitt (18a') des Pflanzgefäßes (18') aufzunehmen und mit diesem in Eingriff zu kommen, so dass das Blatt (10') konfiguriert, um mit mindestens einem Abschnitt des Pflanzgefäßes (18') in Eingriff zu kommen oder sich mit diesem zu verriegeln.

## Revendications

1. Ensemble de plantation comprenant :
un support sous la forme d'au moins une feuille (10') avec une pluralité de rangées d'ouvertures (12') à l'intérieur de celle-ci, la au moins une feuille (10') étant formée en une forme d'onde de telle sorte que les ouvertures (12') soient sensiblement alignées ; et
au moins un réceptacle de plantation (18'), le au moins un réceptacle de plantation (18') étant monté au travers d'au moins deux des ouvertures (12') d'une rangée de la feuille (10'), les réceptacles de plantation (18') étant conçus pour contenir un milieu de culture ;
**caractérisé en ce que** la au moins une feuille (10') inclut une partie découpée (10c') qui est configurée pour recevoir et venir en prise avec une partie de forme correspondante (18a') du réceptacle de plantation (18') de telle sorte que la au moins une feuille (10') soit configurée pour venir en prise, ou se verrouiller, avec au moins une partie du réceptacle de plantation (18').

2. Ensemble de plantation selon la revendication 1, dans lequel les ouvertures (12') sont espacées de manière égale les unes des autres.

3. Ensemble de plantation selon la revendication 1 ou la revendication 2, dans lequel la au moins une feuille (10') est formée en une forme d'onde ondulée.

4. Ensemble de plantation selon l'une quelconque des revendications précédentes, dans lequel la au moins une feuille (10') inclut une pluralité de parties découpées (10a'), les parties découpées (10a') fournissant un accès à l'au moins un réceptacle de plantation (18').

5. Ensemble de plantation selon l'une quelconque des revendications précédentes, dans lequel l'ensemble de plantation comprend une pluralité de feuilles (10') et des réceptacles de plantation associés (18').

6. Ensemble de plantation selon la revendication 5, dans lequel chaque feuille (10') et chaque réceptacle de plantation associé (18') sont montés les uns sur les autres.

7. Ensemble de plantation selon la revendication 6, dans lequel chaque feuille (10') est configurée de telle sorte qu'elle puisse se verrouiller avec une feuille adjacente (10') de l'ensemble de plantation.

8. Ensemble de plantation selon la revendication 7, dans lequel chaque feuille (10') inclut une pluralité de fentes de réception de feuille (10b').

9. Ensemble de plantation selon l'une quelconque des revendications précédentes, dans lequel le réceptacle de plantation (18') inclut au moins une partie découpée (18b') qui est configurée pour recevoir et venir en prise avec une partie de forme correspondante de la feuille (10d').

10. Ensemble de plantation selon l'une quelconque des revendications 5 à 9, dans lequel chaque feuille (10') est décalée horizontalement, ou latéralement, de chaque feuille adjacente (10').

11. Ensemble de plantation selon l'une quelconque des revendications 5 à 10, dans lequel la forme d'onde de chaque feuille (10') est sensiblement déphasée de 180° avec la forme d'onde de n'importe quelle feuille adjacente (10').

12. Ensemble de plantation selon l'une quelconque des revendications précédentes, dans lequel les réceptacles de plantation (18') sont des éléments semi-circulaires sensiblement allongés.

13. Ensemble de plantation selon l'une quelconque des revendications précédentes, dans lequel le réceptacle de plantation (18') est composé d'éthylène-propylène-diène monomère (EPDM), de polyéthylène haute densité (HDPE) ou de polyéthylène basse densité (LDPE).

14. Kits de pièces pour réaliser l'ensemble selon les revendications 5 à 13, comprenant une pluralité de feuilles (10') et une pluralité de réceptacles de plantation (18').

15. Procédé de formation d'un ensemble de plantation comprenant :
la fourniture d'au moins une feuille de matériau (10') ;
la formation d'une pluralité de rangées d'ouvertures dans la feuille (12') ;
la formation de la feuille en une forme d'onde de telle sorte que les ouvertures soient sensiblement alignées ; et
le montage d'un réceptacle de plantation (18') au travers d'au moins deux des ouvertures d'une rangée, le réceptacle de plantation étant conçu pour contenir un milieu de culture ; **caractérisé par**
la formation d'une partie découpée (10c') dans la feuille (10') qui est configurée pour recevoir et venir en prise avec une partie de forme correspondante (18a') du réceptacle de plantation (18') de telle sorte que la feuille (10') soit configurée pour venir en prise, ou se verrouiller, avec au moins une partie du réceptacle de plantation (18').
